# EUROPEAN PATENT SPECIFICATION

(11) **EP 4 088 785 B1**
(45) Date of publication and mention of the grant of the patent: **18.03.2026**
(21) Application number: 22172590.6
(22) Date of filing: 10.05.2022
(51) Int. Cl.: A62C 3/16, A62C 37/08, A62C 37/44

(54) **ESS FIRE EXTINGUISHING SYSTEM**
ESS-FEUERLÖSCHSYSTEM
SYSTÈME D'EXTINCTION D'INCENDIE ESS

(30) Priority: 10.05.2021 KR 20210060298
(43) Date of publication of application: 16.11.2022
(73) Proprietor: Samsung SDI Co., Ltd., Yongin-si, Gyeonggi-do 17084 (KR)
(72) Inventor: LEE, Hyun Soon, Yongin-si (KR); IN, Dong Seok, Yongin-si (KR); KIM, Geon Il, Yongin-si (KR); SONG, In Hyeok, Yongin-si (KR); SONG, Ji Won, Yongin-si (KR); KANG, Deok Jo, Yongin-si (KR); KIM, Myoung Kon, Yongin-si (KR); KANG, Sung Koo, Yongin-si (KR); KIM, Soo Taek, Yongin-si (KR); KIM, Won Sung, Yongin-si (KR)
(74) Representative: Walaski, Jan Filip

(56) References cited:
- CN-A- 110 420 417
- CN-U- 210 644 901
- JP-A- 2017 147 128
- KR-B1- 102 178 601

## Description

### BACKGROUND

### 1. Field

Embodiments relate to a fire extinguishing system for an energy storage system (ESS).

### 2. Description of the Related Art

An ESS (energy storage system or energy storage device) is a system that can store surplus electricity or use renewable energy to store electricity produced. Using the ESS, idle power can be stored during times of low electricity demand and electricity can be supplied during times of high electricity demand, thereby smoothly controlling power supply and demand.

Energy storage systems having fire extinguishing systems that are configured to release a first extinguishing agent from a pipe into a battery case when a heat-sensitive element melts are disclosed in JP 2017 147128 A, CN 210 644 901 U, and CN 110420417 A.

The above-described information disclosed in the background is only for improving the understanding of the background of the art, and thus may include information not constituting the prior art.

### SUMMARY

In accordance with an aspect of the present invention, there is provided a system comprising an energy storage system and a fire extinguishing system according to claim 1. Embodiments of the invention are set out in the dependent claims.

The sensing unit may include a first sensor which is installed inside or outside the battery module to detect temperature or voltage, and a second sensor which is installed outside the battery module to detect smoke, wherein the value detected by the sensor is transmitted to the fire extinguishing unit through BMS, and the value detected by the second sensor is transmitted to the fire extinguishing unit.

The melting temperature of the heat-sensitive member may be 80-250 °C.

The material of the heat-sensitive member may be any one of ABS (Acrylonitrile-butadiene-styrene resin), PP (Polypropylene), PC (polycarbonate), PE (Polyethylene), and PFA (perfluoroalkoxy Alkane).

The fire extinguishing system may further include a supply unit which includes a chemical container for storing the fire extinguishing agent, a leak detector for detecting a leak of the chemical container, a main valve for opening/closing the chemical container, an adjustment device for regulating the discharge pressure of the fire extinguishing agent discharged from the chemical container, and a controller for controlling the main valve.

The fire extinguishing unit may include a main pipe connected to the chemical container, branch pipes connected to the main pipe and branched into the battery rack, respectively, and spray pipes may be connected to the branch pipes and coupled to the battery module, respectively.

The heat-sensitive member may include a body that surrounds the spray pipes, and a thin-film portion which has a thickness smaller than a thickness of the body and is formed in a region corresponding to the spray holes.

The spraying pressure of the fire extinguishing agent that has passed through the adjustment device may be less than the spraying pressure sprayed from the chemical container.

When at least one of the sensing values sensed by the sensing unit is higher than a preset threshold value, the controller may open the main valve.

The battery rack may include a plurality of sub-frames to which the spray pipes are coupled, the battery module includes penetrating portions which are formed to penetrate at positions corresponding to the vent holes, and the spray holes, the sub-frames, and the penetrating portions communicate with one another.

### BRIEF DESCRIPTION OF DRAWINGS

Features will become apparent to those of skill in the art by describing in detail example embodiments with reference to the attached drawings in which:
FIG. 1 is a block diagram schematically showing an extinguishing system according to an example embodiment.
FIG. 2 is a schematic diagram showing an example extinguishing system according to an example embodiment.
FIG. 3 is a perspective view schematically showing main portions according to FIG. 1.
FIG. 4 is a partial perspective view showing a battery rack according to a first example embodiment.
FIG. 5 is a partial perspective view showing a battery rack according to the first example embodiment.
FIG. 6 is a perspective view showing a battery module and spray pipes shown in FIG. 4.
FIG. 7 is an enlarged perspective view of a coupling portion of the battery module and the spray pipes shown in FIG. 6.
FIG. 8 is a partial cross-sectional view taken along line B-B of FIG. 7.
FIG. 9 is a perspective view showing a bottom surface of the spray pipes shown in FIG. 4.
FIG. 10 is an enlarged perspective view of a region C shown in FIG. 9.
FIG. 11 is a plan view showing a bottom surface of the spray pipe shown in FIG. 10.
FIG. 12 is an enlarged perspective view showing a portion of the bottom surface of a spray pipe according to a second example embodiment.
FIG. 13 is a plan view showing a portion of the bottom surface of the spray pipe shown in FIG. 12.
FIG. 14 is a schematic diagram schematically showing a fire suppression process according to an example embodiment.
FIG. 15 is a schematic diagram schematically showing an extinguishing system according to another example embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. Like reference numerals refer to like elements throughout.

As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc., may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" can encompass both an orientation of above and below.

In addition, a controller and/or other related devices or components according to an example embodiment may be implemented using any suitable hardware, firmware (e.g., an application-specific integrated circuit), software, or a combination of software, firmware, and hardware. For example, the controller and/or other related devices or components according to an example embodiment may be formed on one integrated circuit (IC) chip or on separate IC chips. Further, various components of the controller according to an example embodiment may be implemented on a flexible printed circuit film, a tape carrier package (TCP), a printed circuit board (PCB), or the controller formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices.

For example, the controller according to an example embodiment can be operated in a typical commercial computer which includes a central processing unit, a mass storage device, such as a hard disk or a solid state disk, a volatile memory device, an input device, such as a keyboard or a mouse, and an output device, such as a monitor or a printer.

Hereinafter, an ESS fire extinguishing system according to an example embodiment will be described in detail with reference to the accompanying drawings.

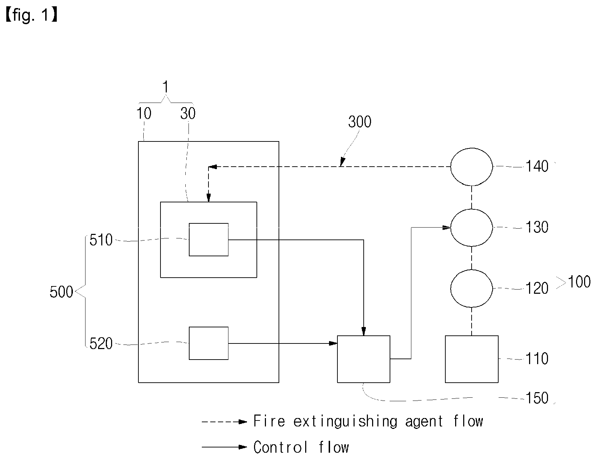

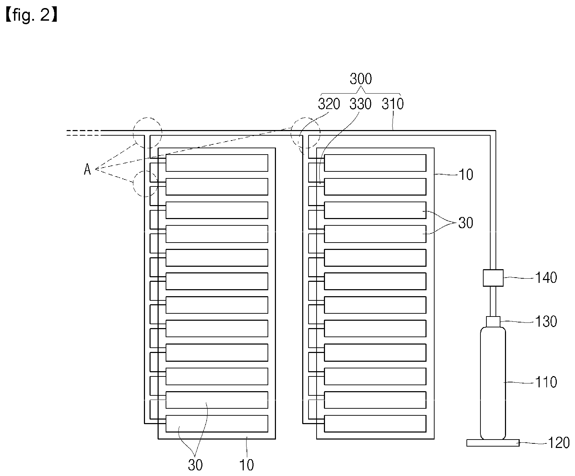

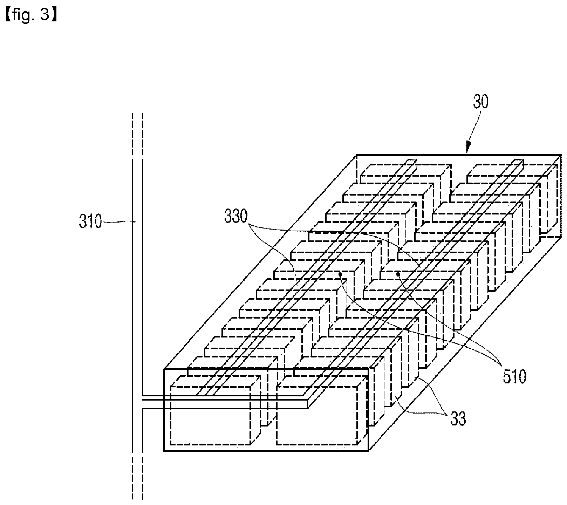

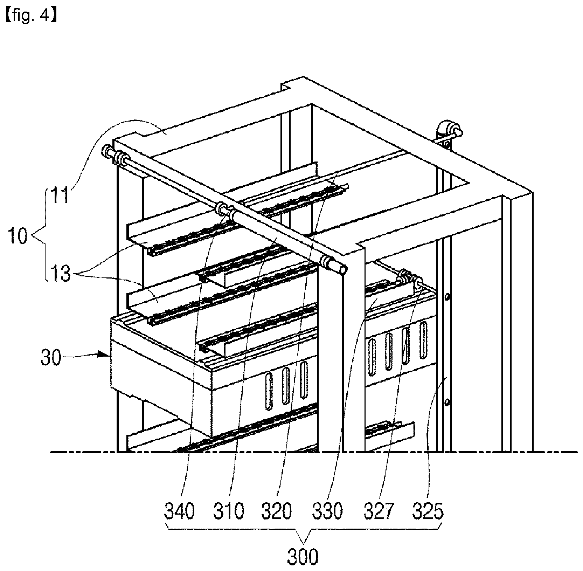

FIG. 1 is a block diagram schematically showing an extinguishing system according to an example embodiment. FIG. 2 is a schematic diagram showing an example extinguishing system according to an example embodiment. FIG. 3 is a perspective view schematically showing main portions according to FIG. 1. FIG. 4 is a partial perspective view showing a battery rack according to a first example embodiment.

Referring to FIGS. 1 to 4, the fire extinguishing system of an energy storage device 1 (the energy storage device may be referred to as an energy storage system or ESS) may include a supply unit 100 for supplying a fire extinguishing agent to an energy storage device 1 and includes, a fire extinguishing unit 300 for transferring and spraying the fire extinguishing agent to the energy storage device 1, and a sensing unit 500 for monitoring a fire.

Referring to FIGS. 1 and 2, the supply unit 100 may include a chemical container 110 for storing the fire extinguishing agent, a leak detector 120 for detecting a leak of the chemical container 110, a main valve 130 for supplying and stopping the supply of the fire extinguishing agent, an adjustment device 140 for regulating the supply pressure and time of the fire extinguishing agent, and a controller 150 as a control body.

Referring to FIGS. 2 to 4, the fire extinguishing unit 300 may include a main pipe 310 to which the fire extinguishing agent is transported, branch pipes 320 which are branched from the main pipe 310, and includes spray pipes 330 which are connected to the battery modules 30 to spray the fire extinguishing agent. For example, a point A at which the branch pipes 320 and the spray pipes 330 are respectively branched is shown in FIG. 2.

Referring to FIG. 1, the sensing unit 500 may include a first sensor 510 for detecting a fire in the battery module 30 and a second sensor 520 for detecting smoke generation in the event of a fire occurring outside the battery module 30.

Before describing the fire extinguishing system in detail, the energy storage device 1 will be briefly described.

Referring to FIGS. 2 to 4, the energy storage device 1 includes a plurality of battery modules 30 mounted on a plurality of battery racks 10, and a plurality of battery cells 33 accommodated in a case 31 of each battery module 30. Each battery cell 33 may be configured as a rechargeable battery capable of charging and discharging.

The battery rack 10 may include a main frame in which pipes may be installed, and a sub-frame 13 for supporting the battery module 30. The main frame may have a substantially hexahedral shape, and a portion thereof corresponding to the plate surface may be closed or open. The sub-frame 13 may be disposed in a direction perpendicular to the longitudinal direction (the up-and-down direction based on FIG. 4) of the battery rack 10 to support the battery module 30. A seating groove 13a, in which each spray pipe 330 (described below) is seated, may be formed on the sub-frame 13. The seating groove 13a may be formed along the insertion direction of the battery module 30. In addition, the seating groove 13a may be sized to correspond to or to be larger than the length and diameter of the spray pipe 330 (described below).

In the battery module 30, the plurality of battery cells 33 may be accommodated in the case 31 having a substantially hexahedral shape. Each of the battery cells 33 may be arranged at regular intervals from each other, and may be arranged in a plurality of rows. A battery management system (BMS) may be mounted in each of the battery modules 30. If a fire occurs in the battery cell 33, a fire signal may be transmitted to the controller 150 (described below). In the battery module 30, a plurality of first sensors 510 may be installed. A second sensor 520 may be installed on the battery rack 10 outside the battery module 30 (described below). The first sensor 510 may be a sensor for detecting an ambient temperature inside the battery module 30. Alternatively, the first sensor 510 may be a voltage detection sensor. As shown in FIG. 3, one first sensor 510 may be disposed in each column of the battery cells 33. In this case, two first sensors 510 may be installed at positions facing each other. The number and installation positions of the first sensors 510 are provided by way of example.

When the measured value, measured by the first sensor 510, is higher than a preset threshold value, the controller 150 may determine to supply the fire extinguishing agent. For example, when the temperature inside the battery module 30, measured by the first sensor 510, is equal to or greater than a threshold value or the voltage is equal to or greater than a threshold value, the BMS may transmit an abnormality signal to the controller 150.

For example, when a threshold temperature is detected, the BMS may determine an abnormal state, e.g., the BMS may determine that an abnormality has occurred in a battery when a temperature of 1 degree or more above the threshold temperature is detected. Alternatively, when a rise of 5 degrees or more per second is detected twice in a row, the BMS may determine that an abnormality has occurred in a battery. In addition, with respect to voltage, if a voltage above a threshold voltage per second is detected twice consecutively, the BMS may determine that an abnormality has occurred in the battery and may drop the voltage.

The fire extinguishing unit 300 may be installed on the battery rack 10 and the battery module 30. When a fire is detected through the sensing unit 500, the fire extinguishing agent may be supplied through the supply unit 100, and the fire extinguishing agent may be transferred to the battery rack 10 and the battery module 30 through the fire extinguishing unit 300. Accordingly, a fire in the battery module 30 may be quickly extinguished at an initial stage. In particular, when the fire extinguishing system of the present example embodiment is applied, the fire extinguishing agent may be supplied to the battery cell 33 where a fire has occurred, among the battery cells 33 in the battery module 30, and to neighboring battery cells 33.

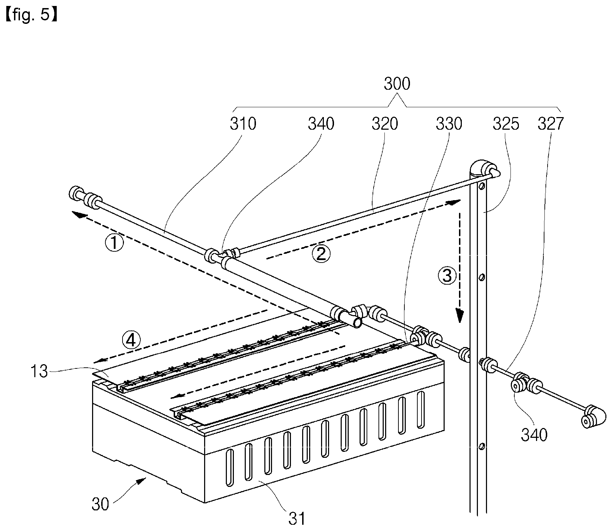

Hereinafter, an extinguishing system according to an example embodiment will be described in detail. (The configurations not shown in FIGS. 5 to 8 will be described with reference to FIGS. 1 to 4).

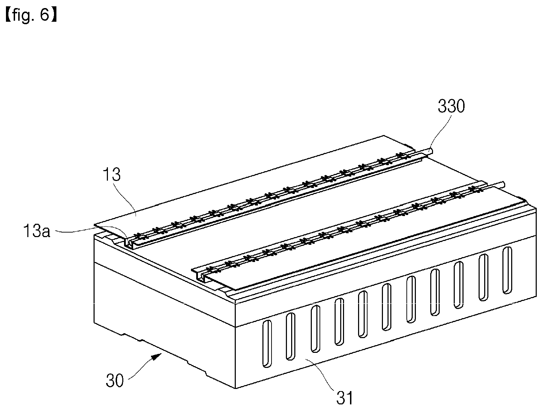

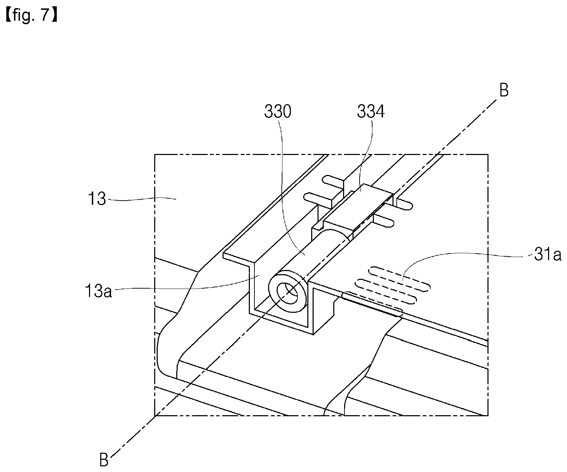

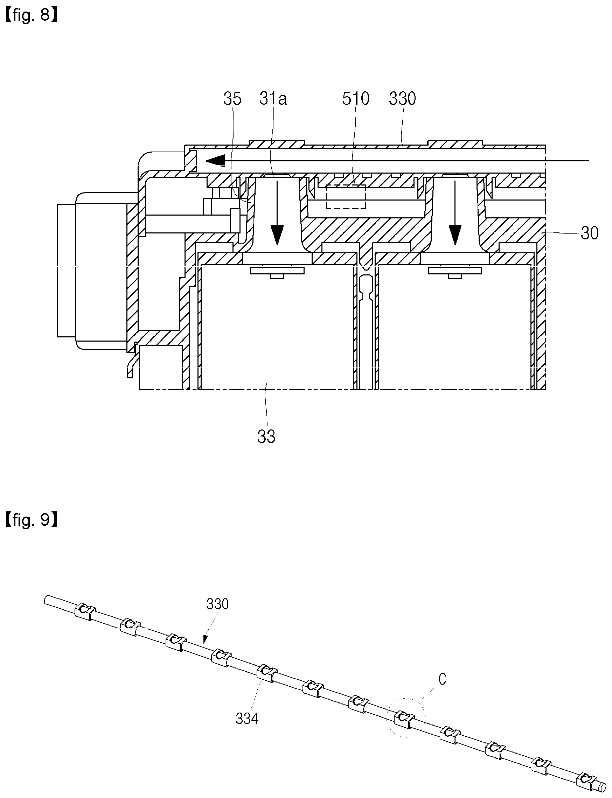

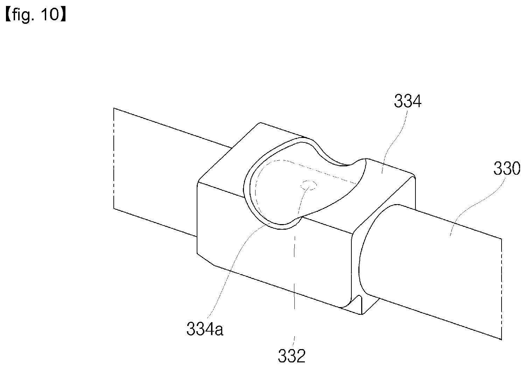

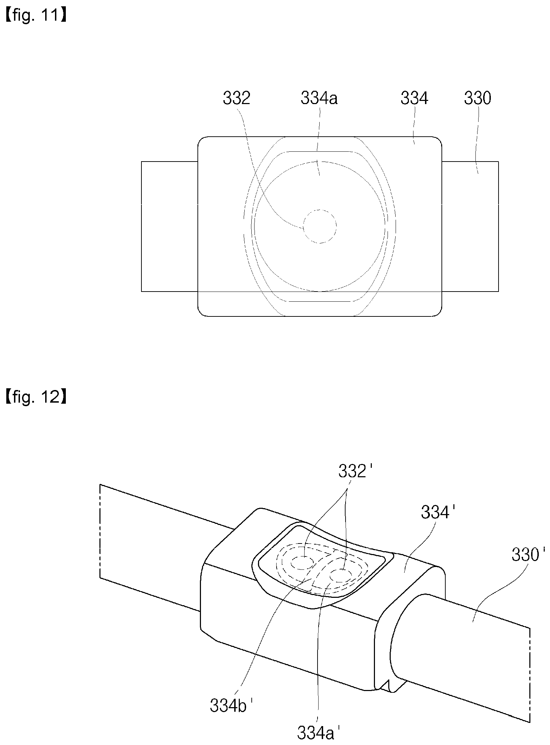

FIG. 5 is a partial perspective view showing the movement direction of the fire extinguishing agent in the battery rack of FIG. 4. FIG. 6 is a perspective view showing a battery module and spray pipes shown in FIG. 4. FIG. 7 is an enlarged perspective view of a coupling portion of the battery module and the spray pipes shown in FIG. 6. FIG. 8 is a partial cross-sectional view taken along line B-B of FIG. 7. FIG. 9 is a perspective view showing a bottom surface of the spray pipe shown in FIG. 4. FIG. 10 is an enlarged perspective view of a region C shown in FIG. 9. FIG. 11 is a plan view showing a bottom surface of the spray pipe shown in FIG. 10.

Referring to FIG. 1, the components of the supply unit 100, the fire extinguishing unit 300, and the sensing unit 500 of the fire extinguishing system may be connected to one another.

First, the supply unit 100 will be described in detail with reference to FIGS. 1 and 2.

The chemical container 110 may be a kind of storage container for storing a fire extinguishing agent. The chemical container 110 may be fixed to an installation site by using a packaging method or a wall-fixing method. For example, the chemical container 110 may be a pressure container for storing a high-pressure extinguishing agent. As the fire extinguishing agent, all general-purpose extinguishing agents including, for example, a gas-based extinguishing agent, such as HFC-23, HFC-125, or HFC-227ea, CF₃CF₂C(O)CF(CF₃)₂, water, etc., may be applied. The fire extinguishing agent may be stored in the chemical container 110 in such a way as a pressure accumulation type or a pressurization type. The internal pressure of the chemical container 110 may vary depending on the country in which an extinguishing system is applied or the type of extinguishing agent (e.g., the fire-extinguishing-cylinder filling pressure ranges are: 25 bar to 42 bar in Korea; 25 bar to 34.5 bar in other countries; and 50 bar or more for gas-based extinguishing agents (HFC-23/HFC-125/HFC-227ea). When the fire extinguishing agent is discharged from the high-pressure chemical container 110, the pressure and flow rate and the spraying time may be adjusted by the adjustment device 140. When the spraying of the fire extinguishing agent is determined by the controller 150, the main valve 130 may be opened and the fire extinguishing agent may be sprayed.

The leak detector 120 may be integrally formed with the chemical container 110, or may be coupled to the chemical container 110. The leak detector 120 may detect a leak before the fire extinguishing agent is sprayed. For example, the leak detector 120 may be a load cell that is coupled to the chemical container 110 to detect a decrease in weight.

The main valve 130 may function to open and close a discharge portion of the chemical container 110 . The main valve 130 may open and close the discharge portion of the chemical container 110 by means of the controller 150. When the main valve 130 is opened, the fire extinguishing agent may be discharged from the chemical container 110 to then be moved to the adjustment device 140 along a discharge pipe.

The adjustment device 140 may function to adjust the spraying pressure of the fire extinguishing agent to the final spraying pressure. For example, the adjustment device 140 may be provided as a regulator that is configured to regulate the spraying pressure. The final spraying pressure of the fire extinguishing agent may be set in advance, and a regulator capable of implementing the set final spraying pressure may be provided. For example, the final spraying pressure may be set to 2-5 bar, and may be less than a pressure within the chemical container 110. The discharge pipe may be a SUS (stainless steel) tube or a flexible hose, and may be connected to the main pipe 310 (described below).

The controller 150 may control the main valve 130 and the adjustment device 140. The controller 150 may be a kind of control board, including a processor, an execution memory, a communication device, a display, and the like. The controller 150 may communicate with the first sensor 510 and the second sensor 520, and may control the main valve 130 and the adjustment device 140. When a fire occurs, the controller 150 may detect the fire through the sensing unit 500 and open the main valve 130. The controller 150 may control the adjustment device 140 to discharge the fire extinguishing agent at a preset final spraying pressure to move the same to the fire extinguishing unit 300.

Referring to FIGS. 2 to 4, the fire extinguishing unit 300 may include a main pipe 310, which is connected to the chemical container 110 and to which the fire extinguishing agent is transported, a branch pipe 320, which is branched from the main pipe 310, a rack pipe 325, which is connected to the branch pipe 320 disposed on the respective battery racks 10, a connection pipe 327, spray pipes 330, which are disposed adjacent to the respective battery modules 30, and connectors 340, which connect the pipes. All of these components may have a hollow pipe shape (for convenience of expression, the main pipe 310, the branch pipes 320, the rack pipe 325, the connection pipe 327, and the spray pipes 330 are differently expressed in a cylindrical or rectangular parallelepiped shape in some figures). The main pipe 310 and the branch pipes 320 may be configured such that a plurality of pipes are gathered to perform one function.

In more detail, the main pipe 310 may extend to the energy storage device 1 by connecting a plurality of pipes. The branch pipes 320 may be coupled by connector 340 to the main pipe 310, and may be installed adjacent to or on the battery rack 10. The rack pipe 325 connected to the branch pipes 320 may be installed on the respective battery racks 10. The rack pipe 325 and the plurality of spray pipes 330 may be connected, and the spray pipes 330 may be installed in parallel with the battery modules 30. The connector 340 may be branched into two ways, three ways, four ways, etc., and may be coupled to connection portions between a plurality of main pipes 310, connection portions between the main pipe 310 and the branch pipes 320, and connection portions between the branch pipes 320 and the rack pipe 325. In an event of a fire, the fire extinguishing agent supplied from the chemical container 110 may be transferred to the energy storage device 1 through the main pipe 310, and may be supplied to the respective battery modules 30 through the branch pipes 320 and the spray pipes 330.

Referring to FIGS. 4 and 5, one battery rack 10 will now be described by way of example.

Assuming that the direction in which the battery modules 30 are inserted is defined as the front portion of the battery racks 10, the main pipe 310 may be coupled to the front upper portion of the battery racks 10. For example, the branch pipes 320 may be disposed at the center of the upper portion of the battery racks 10. The rack pipe 325 may be connected to the rear of the branch pipes 320. The rack pipe 325 may be disposed along the longitudinal direction of the battery racks 10. For example, the rack pipe 325 may be disposed at the center of the rear portion of the battery rack 10. The spray pipes 330 may be connected to the rack pipe 325, and the spray pipes 330 may be disposed adjacent to the respective battery modules 30. The spray pipes 330 may be connected to the rack pipe 325, and may be connected to the rack pipe by a plurality of auxiliary pipis 327. The spray pipes 330 may be coupled on the sub-frame 13 of the battery rack 10. The fire extinguishing agent may be sprayed downward from the spray pipes 330 coupled to the sub-frame 13. The spray pipes 330 may correspond to the number of columns of the battery cells 33 accommodated in the battery modules 30. For example, if the battery cells 33 are arranged in two rows in one battery module 30, two spray pipes 330 may be connected.

Referring to FIG. 5, in an event of a fire, the direction in which the fire extinguishing agent moves may correspond to the direction of arrows. First, the fire extinguishing agent that has moved to the front of the battery rack 10 along the longitudinal direction of the main pipe 310 (①) may move from the front upper portion to the rear portion of the battery rack 10 along the branch pipes 320 (②). Thereafter, while moving from the rear upper portion to the lower portion of the battery rack 10 along the rack pipe 325 (③) and to the front portion of the battery rack 10 along the respective spray pipes 330 (④), the fire extinguishing agent may be supplied to the battery cell 33 where a fire has occurred. The moving direction of the fire extinguishing agent shown in FIG. 5 is based on an installation example of pipes, and if the arrangement of pipes is changed, the moving direction of the fire extinguishing agent may also be changed accordingly. A plurality of spray holes 332 are formed to penetrate the spray pipes 330, and the spray holes 332 are positioned to correspond to the respective battery cells 33 (described below). The fire extinguishing agent that has moved through the spray pipes 330 may be directly sprayed into the upper portion of the battery cells 33 through a penetrating portion 31a formed on the case 31 of the battery module 30.

Hereinafter, the structure in which the fire extinguishing agent is directly sprayed onto the upper portion of the battery cell 33 will be described in more detail.

Referring to FIGS. 6 to 8, a seating groove 13a may be formed on the sub-frame 13 of the battery rack 10 along the direction in which the battery module 30 is inserted. In addition, the seating groove 13a may be formed along the rows in which the battery cells 33 are arranged, and the longitudinal direction of the seating groove 13a may correspond to the longitudinal direction of the spray pipe 330. Meanwhile, although not shown in the drawings, a hole may be formed to penetrate the seating groove 13a so that the fire extinguishing agent passes when the fire extinguishing agent is sprayed. The hole may be formed in the bottom side (the upper surface side of the battery module 30) of the seating groove 13a to correspond to the spraying direction of the fire extinguishing agent. In addition, a plurality of penetrating portions 31a may be formed in the case 31 of the battery module 30 so as to correspond to the position of the hole formed in the seating groove 13a and the positions of vent holes of the battery cells 33.

The penetrating portions 31a may be formed to penetrate on the upper surface of the case 31. The penetrating portions 31a may be formed in a circular shape, an elliptical shape, a long-hole shape, a narrow-and-long slit shape, or the like. One or a plurality of penetrating portions 31a may be provided. The penetrating portions 31a may communicate with the hole formed in the seating groove 13a and spray holes 332 of the spray pipes 330 (described below). Accordingly, as shown in FIG. 8, the spray pipes 330 and the inside of the case 31 may communicate with each other through the hole of the seating groove 13a and the penetrating portions 31a of the case 31. Therefore, the fire extinguishing agent supplied through the spray pipes 330 may be supplied to the case 31. Here, bus bar holders (not shown) may be provided inside the case 31, and may communicate with the penetrating portions 31a. The bus bar holders may be disposed at positions corresponding to the vent holes of the battery cells 33. The bus bar holders serve as a passage (vent passage) through which the fire extinguishing agent is sprayed.

A heat-sensitive member 334 is provided in the spray pipe 330 so that the fire extinguishing agent can be selectively sprayed only in an event of a fire.

Referring to FIG. 9, a plurality of heat-sensitive members 334 may be provided on the spray pipes 330. The heat-sensitive members 334 surround the respective spray holes 332 formed on the spray pipes 330 to prevent the fire extinguishing agent from being exposed. Here, one heat-sensitive member 334 is provided to surround one spray hole 332, respectively. In addition, when a fire occurs, the heat-sensitive members 334 are melted due to the heat caused by the fire so that the spray holes 332 are opened. When the spray holes 332 are opened, the fire extinguishing agent that has moved through the spray pipes 330 is allowed into, e.g., directly sprayed to, the upper portion of the battery cell 33. To this end, the spray holes 332 are formed to correspond to the positions of the penetrating portions 31a of the case 31, formed so as to correspond to the positions of the vents of the respective battery cells 33. For example, the diameter of the spray hole 332 may be in the range of 2 mm to 2.5 mm (a first range), and a second range of the diameter may be in the range of 1 mm to 4 mm.

Referring to FIGS. 10 and 11, the heat-sensitive member 334 is shaped to completely surround the spray hole 332 and the surrounding thereof. For example, the heat-sensitive member 334 may have a polyhedral, spherical, or hemispherical body. Although the heat-sensitive member 334 may be illustrated in a rectangular parallelepiped shape, the shape may be varied. The heat-sensitive member 334 may be formed so as to withstand a final spraying pressure (e.g., 2-5 bar) of the fire extinguishing agent. In addition, when a fire occurs in the battery cell 33, the heat-sensitive member 334 is melted by heat discharged from the cell vent or by flame or spark caused by the fire. Accordingly, when a fire occurs, the spray hole 332 is opened so that the fire extinguishing agent can be sprayed to a fire site. For example, the heat-sensitive member 334 is melted when a temperature of the heat-sensitive member 334 is higher than a predetermined temperature, e.g., in the range of 80 °C to 250 °C. Here, 80 degrees Celsius (°C) may be a temperature at which the heat-sensitive member 334 starts to melt, and 250 °C may be a temperature at which the heat-sensitive member 334 completely melts. For a fire that occurs in the battery module 30, the material of the heat-sensitive member 334 may be determined in consideration of the temperature rise. For example, the heat-sensitive member 334 may be made of a resin material, such as ABS (acrylonitrile butadiene styrene), PP (polypropylene), PC (polycarbonate), PE (polyethylene), or PFA (perfluoroalkoxy alkane). The resin material may be made by applying a high-pressure spraying or molding pressure to integrally form the heat-sensitive member 334 on the spray pipe 330.

By adjusting the thickness, material, and shape of the heat-sensitive member 334, the time for which the heat-sensitive member 334 is melted by heat, flame, or spark to open the spray hole 332 can be adjusted. For example, by forming a thin-film portion 334a on the lower surface side of the heat-sensitive member 334 corresponding to the position of the spray hole 332, the thickness of the heat-sensitive member 334 positioned at the side of the spray hole 332 may be made thinner than other portions. Therefore, when heat is applied to the heat-sensitive member 334, the thin-film portion 334a may melt faster than the other portions, so that the fire extinguishing agent may be sprayed faster. For example, assuming that the thickness of the heat-sensitive member 334 around the thin-film portion 334a is 1 mm, the thickness of the thin-film portion 334a may be in the range of 0.3 mm to 0.6 mm (first range). A second range of the thickness of the thin-film portion 334a may be in the range of 0.2 mm to 0.9 mm.

Meanwhile, a pair of spray holes 332 may be formed at each position where one heat-sensitive member 334 is provided.

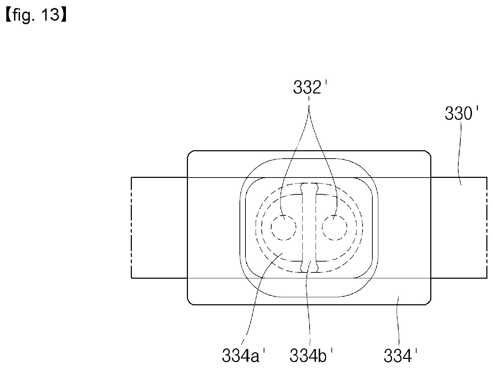

FIG. 12 is an enlarged perspective view showing a portion of the bottom surface of a spray pipe according to a second example embodiment. FIG. 13 is a plan view showing a portion of the bottom surface of the spray pipe shown in FIG. 12.

Referring to FIGS. 12 and 13, two spray holes 332' may be formed on the spray pipes 330' covered by a thin-film portion 334a' of a heat-sensitive member 334'. A rib 334b', disposed between the two spray holes 332', may be formed in the thin-film portion 334a'. The rib 334b' may be shaped to protrude from the surface of the thin-film portion 334a', and may have a thickness greater than the thickness of the thin-film portion 334a' in a portion where the spray holes 332' are formed. In order to prevent the two spray holes 332' from being first melted before the spray holes 332' are opened, the rib 334b' may be formed to be thicker than the portion where the spray holes 332' are formed. Therefore, when heat is applied to the heat-sensitive member 334', the thin-film portion 334a' that blocks the two spray holes 332" may be melted earlier than the rib 334b', and thus the spray holes 332' are opened to spray the fire extinguishing agent.

A fire suppressing process in the aforementioned fire extinguishing system according to an example embodiment will now be described (for convenience, description will be made on the bases of reference numerals of the first embodiment).

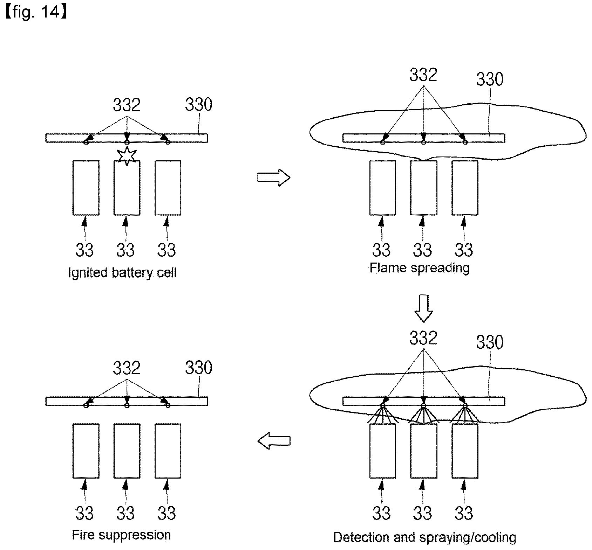

FIG. 14 is a schematic diagram schematically showing a fire suppression process according to an example embodiment.

Referring to FIG. 14, one of the battery cells 33 may ignite in a specific one of the battery modules 30. The spray pipe 330, through which a fire extinguishing agent is sprayed, may be connected to each battery module 30, and a first sensor 510 for detecting a fire may be provided inside the battery module 30. When a temperature rise inside the battery module 30 occurs due to heat generated by a fire, the first sensor 510 may detect the temperature rise. When the fire is detected by the first sensor 510, a fire detection signal may be transmitted to the controller 150 through the BMS of the battery module 30 (signal transmission may be accomplished in several ways, such as wireless communication or electrical signal transmission through contact points.). When the controller 150 detects a fire through the first sensor 510, the main valve 130 of the chemical container 110 may be opened. The pressure of the fire extinguishing agent discharged from the chemical container 110 may be adjusted to the final spraying pressure in the adjustment device 140, and the fire extinguishing agent may then be discharged. The discharged extinguishing agent may be transferred along the main pipe 310 and the branch pipes 320.

Meanwhile, flame and heat may be generated in the battery cell 33 where a fire has occurred, and the heat-sensitive member 334 of the adjacent spray pipe 330 is melted by the flame and heat. When the heat-sensitive member 334 is melted and the spray hole 332 is opened, the pressure of the corresponding portion is lowered, so that the fire extinguishing agent moves toward the spray pipe 330 in which the spray hole 332 is opened according to the pressure gradient. Therefore, the fire extinguishing agent is supplied to the battery cell 33 where a fire has occurred and can be sprayed on the fire site. As the fire is extinguished and, e.g., cooled, by spraying the fire extinguishing agent, it may be possible to prevent the fire from moving to an adjacent battery module 30.

According to an example embodiment, in addition to the fire detection by means of a sensor, fire monitoring may also be performed through smoke detection, as will now be described.

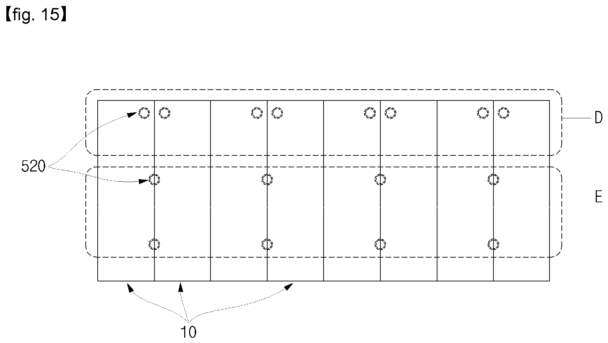

FIG. 15 is a schematic diagram schematically showing an extinguishing system according to another example embodiment.

Referring to FIG. 15, a plurality of second sensors 520, e.g., smoke sensors, may be installed on a battery rack 10. The second sensors 520 may be applied in combination with a first sensor 510, or only the second sensors 520 may be applied without the first sensor 510. The second sensors 520 may be installed in an upper region (D) of the battery rack 10 in consideration of the smoke rising upwards. However, when a lot of smoke is generated, the smoke may move not only upwards but also spread around a fire area, and thus the second sensors 520 may also be installed in a lower region (E) of the battery rack 10 for reference detection. For example, the second sensors 520 may be installed in the upper region (D) of each battery rack 10, and may be installed one by one between two battery racks 10. Alternatively, the second sensors 520 may be installed in the upper region (D) of each battery rack 10, and one or two second sensors 520 may be installed between two battery racks 10.

By way of summation and review, in a space or facility where the ESS is installed and operated, it may be mandatory to have equipment for controlling a battery fire which may occur due to electric shock, short circuit, external surge, etc. A general extinguishing system may have a fire detection sensor, a sprinkler installed around a battery rack or a ceiling, a fire extinguishing agent sprayer, and so on, implemented as an indirect spraying type, in which, in an event of a battery fire, water or a fire extinguishing agent is sprayed close to a battery or over the entire area where the battery is installed. However, as the energy density of a battery continues is increased, a flame amount and spraying pressure may rise at a vent of a battery cell, and thus it may be difficult to suppress or control a fire at an early stage by using general fire suppression equipment.

As described above, by configuring an extinguishing system, a fire of an ESS, which may occur due to a fire caused by electric shock, short circuit, external surge, etc., may be controlled and suppressed at an early stage to minimize a fire spreading. Accordingly, expensive energy storage devices may be protected and customer reliability may be improved. Embodiments may provide an ESS fire extinguishing system capable of effectively suppressing and extinguishing a fire of an ESS at an early stage. According to an embodiment, by configuring an extinguishing system, a fire of an ESS, which may be a fire caused by electric shock, short circuit, external surge, etc., may be controlled and suppressed at an early stage to minimize fire spreading. Accordingly, expensive energy storage devices may be protected and customer reliability may be improved.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A system comprising: an energy storage system and a fire extinguishing system,
wherein the energy storage system comprises:
a battery cell (33) having a vent hole;
a battery module (30) for accommodating the battery cell (33); and
a battery rack (10) for accommodating a battery module (30),
wherein the fire extinguishing system comprises:
a sensing unit (500) configured to detect when a value of one or more of a temperature of the battery module (30), a voltage of the battery module (30), or a level of smoke from the battery module (30) is higher than a preset threshold value; and
a fire extinguishing unit (300) configured to provide a fire extinguishing agent to the battery module (30) when the sensing unit (500) detects that the value is higher than the preset threshold value,
wherein the fire extinguishing unit (300) includes:
a spray pipe (330) having a spray hole (332) that penetrates the spray pipe (330) at a position corresponding to the vent hole, and
a heat-sensitive member (334), and wherein:
the heat sensitive member (334) is configured to surround the spray pipe (330) at a position to block the spray hole (332),
the heat-sensitive member (334) is positioned at the vent hole for the battery cell (33) in the battery module (30), and
the heat-sensitive member (334) is configured to melt when a temperature of the heat-sensitive member (334) is higher than a predetermined temperature to allow the fire extinguishing agent into the vent hole.

2. The system as claimed in claim 1, wherein the sensing unit (500) includes a first sensor (510) installed inside or outside the battery module (30) to detect one or more of the temperature of the battery module (30) or the voltage of the battery module (30),
the sensing unit (500) includes a second sensor (520) installed outside the battery module (30) to detect the smoke from the battery module (30), and
the first sensor (510) and the second sensor (520) communicate with the fire extinguishing unit (300).

3. The system according to claim 2, wherein the first sensor (510) communicates with the fire extinguishing unit (300) through a battery management system.

4. The system as claimed in claim 1, 2 or 3, wherein the predetermined temperature at which the heat-sensitive member (334) melts is 80 °C to 250 °C.

5. The system as claimed in any one of the preceding claims, wherein a material of the heat-sensitive member (334) includes one or more of acrylonitrile butadiene styrene, polypropylene, polycarbonate, polyethylene, or perfluoroalkoxy alkane.

6. The system as claimed in any one of the preceding claims, further comprising:
a supply unit (100) which includes a chemical container (110) for storing the fire extinguishing agent,
a main valve (130) configured to open and close the chemical container (110),
an adjustment device (140) configured to regulate a discharge pressure of the fire extinguishing agent discharged from the chemical container (110), and
a controller (150) configured to control the main valve (130).

7. The system according to claim 6, further comprising a leak detector (120) configured to detect a leak of the chemical container (110).

8. The system as claimed in claim 6 or 7, wherein the fire extinguishing unit (300) further includes:
a main pipe (310) connected to the chemical container (110); and
a branch pipe (320) connected to the main pipe (310) and branched into the battery rack (10), and
wherein the spray pipe (330) is connected to the branch pipe (320) and coupled to the battery module (30).

9. The system as claimed in claim 8, wherein the battery rack (10) includes a sub-frame (13) to which the spray pipe (330) is coupled,
the battery module (30) includes a penetrating portion (31a) that penetrates at a position corresponding to the vent hole, and
the spray hole (332), the sub-frame (13), and the penetrating portion (31a) communicate with one another.

10. The system as claimed in claim 8 or 9, wherein the heat-sensitive member (334) forms:
a main body that surrounds the spray pipe (330), and
the main body includes a thin-film portion (334a) having a smaller thickness than a thickness of the main body and disposed in a region corresponding to the spray hole (332).

11. The system as claimed in claim 8, 9 or 10, wherein a spraying pressure of the fire extinguishing agent that has passed through the adjustment device (140) is less than a pressure within the chemical container (110).

12. The system as claimed in any one of claims 6 to 11, wherein the controller (150) is configured to open the main valve (130) when the sensing unit (500) detects that a value of one or more of a temperature of the battery module (30), a voltage of the battery module (30), or a level of smoke from the battery module (30) is higher than the preset threshold value.

## Patentansprüche

1. System, umfassend: ein Energiespeichersystem und ein Feuerlöschsystem,
wobei das Energiespeichersystem Folgendes umfasst:
eine Batteriezelle (33) mit einem Entlüftungsloch;
ein Batteriemodul (30) zum Aufnehmen der Batteriezelle (33); und
ein Batteriegestell (10) zum Aufnehmen eines Batteriemoduls (30),
wobei das Feuerlöschsystem Folgendes umfasst:
eine Erfassungseinheit (500), die dazu konfiguriert ist, zu detektieren, wenn ein Wert von einem oder mehreren von einer Temperatur des Batteriemoduls (30), einer Spannung des Batteriemoduls (30) oder einem Rauchniveau von dem Batteriemodul (30) höher als ein voreingestellter Schwellenwert ist; und
eine Feuerlöscheinheit (300), die dazu konfiguriert ist, ein Feuerlöschmittel an das Batteriemodul (30) bereitzustellen, wenn die Erfassungseinheit (500) detektiert, dass der Wert höher als der voreingestellte Schwellenwert ist,
wobei die Feuerlöscheinheit (300) Folgendes beinhaltet:
ein Sprührohr (330) mit einem Sprühloch (332), welches das Sprührohr (330) an einer Position entsprechend dem Entlüftungsloch penetriert, und
ein wärmeempfindliches Element (334), und wobei:
das wärmeempfindliche Element (334) dazu konfiguriert ist, das Sprührohr (330) an einer Position zu umgeben, um das Sprühloch (332) zu blockieren,
das wärmeempfindliche Element (334) an dem Entlüftungsloch für die Batteriezelle (33) in dem Batteriemodul (30) positioniert ist, und
das wärmeempfindliche Element (334) dazu konfiguriert ist, zu schmelzen, wenn eine Temperatur des wärmeempfindlichen Elements (334) höher als eine vorbestimmte Temperatur ist, um das Feuerlöschmittel in das Entlüftungsloch zu lassen.

2. System nach Anspruch 1, wobei die Erfassungseinheit (500) einen ersten Sensor (510) beinhaltet, der innerhalb oder außerhalb des Batteriemoduls (30) installiert ist, um eines oder mehrere von der Temperatur des Batteriemoduls (30) oder der Spannung des Batteriemoduls (30) zu detektieren,
die Erfassungseinheit (500) einen zweiten Sensor (520) beinhaltet, der außerhalb des Batteriemoduls (30) installiert ist, um den Rauch von dem Batteriemodul (30) zu detektieren, und
der erste Sensor (510) und der zweite Sensor (520) mit der Feuerlöscheinheit (300) kommunizieren.

3. System gemäß Anspruch 2, wobei der erste Sensor (510) mit der Feuerlöscheinheit (300) durch ein Batteriemanagementsystem kommuniziert.

4. System nach Anspruch 1, 2 oder 3, wobei die vorbestimmte Temperatur, bei der das wärmeempfindliche Element (334) schmilzt, 80 °C bis 250 °C ist.

5. System nach einem der vorhergehenden Ansprüche, wobei ein Material des wärmeempfindlichen Elements (334) eines oder mehrere von Acrylnitril-Butadien-Styrol, Polypropylen, Polycarbonat, Polyethylen oder Perfluoralkoxyalkan beinhaltet.

6. System nach einem der vorhergehenden Ansprüche, ferner umfassend:
eine Versorgungseinheit (100), die einen Chemikalienbehälter (110) zum Aufbewahren des Feuerlöschmittels beinhaltet,
ein Hauptventil (130), das dazu konfiguriert ist, den Chemikalienbehälter (110) zu öffnen und zu schließen,
eine Einstellvorrichtung (140), die dazu konfiguriert ist, einen Auslassdruck des Feuerlöschmittels, das aus dem Chemikalienbehälter (110) ausgelassen wird, zu regulieren, und
eine Steuerung (150), die dazu konfiguriert ist, das Hauptventil (130) zu steuern.

7. System gemäß Anspruch 6, ferner umfassend einen Leckdetektor (120), der dazu konfiguriert ist, ein Leck des Chemikalienbehälters (110) zu detektieren.

8. System nach Anspruch 6 oder 7, wobei die Feuerlöscheinheit (300) ferner Folgendes beinhaltet:
ein Hauptrohr (310), das mit dem Chemikalienbehälter (110) verbunden ist; und
ein Zweigrohr (320), das mit dem Hauptrohr (310) verbunden und in das Batteriegestell (10) verzweigt ist, und
wobei das Sprührohr (330) mit dem Zweigrohr (320) verbunden und an das Batteriemodul (30) gekoppelt ist.

9. System nach Anspruch 8, wobei das Batteriegestell (10) einen Unterrahmen (13) beinhaltet, an den das Sprührohr (330) gekoppelt ist,
das Batteriemodul (30) einen penetrierenden Abschnitt (31a) beinhaltet, der an einer Position entsprechend dem Entlüftungsloch penetriert, und
das Sprühloch (332), der Unterrahmen (13) und der penetrierende Abschnitt (31a) miteinander kommunizieren.

10. System nach Anspruch 8 oder 9, wobei das wärmeempfindliche Element (334) Folgendes bildet:
einen Hauptkörper, der das Sprührohr (330) umgibt, und
der Hauptkörper einen Dünnschichtabschnitt (334a) beinhaltet, der eine kleinere Dicke als eine Dicke des Hauptkörpers aufweist und in einer Region entsprechend dem Sprühloch (332) angeordnet ist.

11. System nach Anspruch 8, 9 oder 10, wobei ein Sprühdruck des Feuerlöschmittels, das die Einstellvorrichtung (140) passiert hat, weniger als ein Druck innerhalb des Chemikalienbehälters (110) ist.

12. System nach einem der Ansprüche 6 bis 11, wobei die Steuerung (150) dazu konfiguriert ist, das Hauptventil (130) zu öffnen, wenn die Erfassungseinheit (500) detektiert, dass ein Wert von einem oder mehreren von einer Temperatur des Batteriemoduls (30), einer Spannung des Batteriemoduls (30) oder einem Rauchniveau von dem Batteriemodul (30) höher als der voreingestellte Schwellenwert ist.

## Revendications

1. Système comprenant : un système de stockage d'énergie et un système d'extinction d'incendie, ledit système de stockage d'énergie comprenant :
un élément de batterie (33) comportant un trou d'évent ;
un module de batterie (30) destiné à recevoir l'élément de batterie (33) ; et
un bâti de batterie (10) destiné à recevoir un module de batterie (30),
ledit système d'extinction d'incendie comprenant :
une unité de détection (500) configurée pour détecter lorsqu'une valeur d'un ou plusieurs parmi une température du module de batterie (30), une tension du module de batterie (30) ou un niveau de fumée provenant du module de batterie (30) est supérieure à une valeur de seuil prédéfinie ; et
une unité d'extinction d'incendie (300) configurée pour fournir un agent d'extinction d'incendie au module de batterie (30) lorsque l'unité de détection (500) détecte que la valeur est supérieure à la valeur de seuil prédéfinie,
ladite unité d'extinction d'incendie (300) comprenant :
un tuyau de pulvérisation (330) comportant un trou de pulvérisation (332) qui pénètre dans le tuyau de pulvérisation (330) au niveau d'une position correspondant au trou d'évent, et
un élément thermosensible (334), et
ledit élément thermosensible (334) étant configuré pour entourer le tuyau de pulvérisation (330) au niveau d'une position pour bloquer le trou de pulvérisation (332),
ledit élément thermosensible (334) étant positionné au niveau du trou d'évent de l'élément de batterie (33) dans le module de batterie (30), et
ledit élément thermosensible (334) étant configuré pour fondre lorsqu'une température de l'élément thermosensible (334) est supérieure à une température prédéfinie pour permettre à l'agent d'extinction d'incendie d'entrer dans le trou d'évent.

2. Système selon la revendication 1, ladite unité de détection (500) comprenant un premier capteur (510) installé à l'intérieur ou à l'extérieur du module de batterie (30) pour détecter un ou plusieurs parmi la température du module de batterie (30) ou la tension du module de batterie (30),
ladite unité de détection (500) comprenant un second capteur (520) installé à l'extérieur du module de batterie (30) pour détecter la fumée provenant du module de batterie (30), et
ledit premier capteur (510) et ledit second capteur (520) communiquant avec l'unité d'extinction d'incendie (300).

3. Système selon la revendication 2, ledit premier capteur (510) communiquant avec l'unité d'extinction d'incendie (300) par l'intermédiaire d'un système de gestion de batterie.

4. Système selon la revendication 1, 2 ou 3, ladite température prédéfinie à laquelle l'élément thermosensible (334) fond étant de 80°C à 250°C.

5. Système selon l'une quelconque des revendications précédentes, un matériau de l'élément thermosensible (334) comprenant un ou plusieurs parmi l'acrylonitrile butadiène styrène, le polypropylène, le polycarbonate, le polyéthylène ou le perfluoroalkoxyalcane.

6. Système selon l'une quelconque des revendications précédentes, comprenant en outre : une unité d'alimentation (100) qui comprend un récipient pour produits chimiques (110) destiné à stocker l'agent d'extinction d'incendie,
une soupape principale (130) configurée pour ouvrir et fermer le récipient pour produits chimiques (110),
un dispositif de réglage (140) configuré pour réguler une pression de décharge de l'agent d'extinction d'incendie déchargé du récipient pour produits chimiques (110), et
un dispositif de commande (150) configuré pour commander la soupape principale (130).

7. Système selon la revendication 6, comprenant en outre un détecteur de fuite (120) configuré pour détecter une fuite du récipient pour produits chimiques (110).

8. Système selon la revendication 6 ou 7, ladite unité d'extinction d'incendie (300) comprenant en outre :
un tuyau principal (310) raccordé au récipient pour produits chimiques (110) ; et
un tuyau de dérivation (320) raccordé au tuyau principal (310) et branché dans le bâti de batterie (10), et
ledit tuyau de pulvérisation (330) étant raccordé au tuyau de dérivation (320) et couplé au module de batterie (30).

9. Système selon la revendication 8, ledit bâti de batterie (10) comprenant un sous-châssis (13) auquel le tuyau de pulvérisation (330) est couplé,
ledit module de batterie (30) comprenant une partie pénétrante (31a) qui pénètre au niveau d'une position correspondant au trou d'évent, et
ledit trou de pulvérisation (332), ledit sous-châssis (13) et ladite partie pénétrante (31a) communiquant les uns avec les autres.

10. Système selon la revendication 8 ou 9, ledit élément thermosensible (334) formant :
un corps principal qui entoure le tuyau de pulvérisation (330), et
ledit corps principal comprenant une partie de film mince (334a) possédant une épaisseur inférieure à une épaisseur du corps principal et disposée dans une zone correspondant au trou de pulvérisation (332).

11. Système selon la revendication 8, 9 ou 10, une pression de pulvérisation de l'agent d'extinction d'incendie qui a traversé le dispositif de réglage (140) étant inférieure à une pression à l'intérieur du récipient pour produits chimiques (110).

12. Système selon l'une quelconque des revendications 6 à 11, ledit dispositif de commande (150) étant configuré pour ouvrir la soupape principale (130) lorsque l'unité de détection (500) détecte qu'une valeur d'un ou plusieurs parmi une température du module de batterie (30), une tension du module de batterie (30) ou un niveau de fumée provenant du module de batterie (30) est supérieure à la valeur de seuil prédéfinie.
